# FASCICULE DE BREVET EUROPEEN

(11) **EP 2 327 893 B1**
(45) Date de publication et mention de la délivrance du brevet: **23.05.2012**
(21) Numéro de dépôt: 10192856.2
(22) Date de dépôt: 29.11.2010
(51) Int. Cl.: F16C 17/12, F16C 17/14, F16C 33/66, F03B 13/10, F16C 23/04, F16C 27/02, F16C 27/08, F16C 33/10, F16C 17/06

(54) **Ensemble de palier pour arbre d'hydrolienne et hydrolienne comprenant un tel ensemble de palier**
Wellenlagereinheit für Welle eines Wellenkraftwerks, und eine solche Wellenlagereinheit umfassendes Wellenkraftwerk
Bearing assembly for a marine-turbine shaft and marine turbine including such a bearing assembly

(30) Priorité: 30.11.2009 FR 0958519
(43) Date de publication de la demande: 01.06.2011
(73) Titulaire: ALSTOM Hydro France, 92300 Levallois Perret (FR)
(72) Inventeur: Bertea, Jean-François, 07300 Saint Jean de Muzols (FR)
(74) Mandataire: Myon, Gérard Jean-Pierre

(56) Documents cités:
- GB-A- 1 140 773
- US-A- 1 425 979
- US-A- 4 288 128

## Description

La présente invention concerne un ensemble de palier pour supporter un arbre d'hydrolienne en rotation, c'est-à-dire pour reprendre les efforts axiaux exercés par cet arbre. Par ailleurs, la présente invention concerne une hydrolienne comprenant un arbre mobile en rotation, ainsi qu'un tel ensemble de palier. En particulier, la présente invention peut être appliquée à une hydrolienne installée au sein d'un flux de liquide moteur qui peut circuler dans l'un ou l'autre sens.

Une turbine hydraulique de l'art antérieur comprend généralement un arbre d'environ 1 m de diamètre et un ensemble de palier baignant dans l'huile pour supporter cet arbre en rotation. En particulier, pour reprendre les efforts radiaux exercés par l'arbre, plusieurs unités de palier sont réparties autour de l'axe de rotation. Les unités de palier comportent généralement une embase fixe, un organe élastique et une surface de palier qui délimite avec l'arbre un film d'huile d'environ 0,5 mm d'épaisseur.

Les unités de palier et le film d'huile ont pour fonction de limiter les accostages de l'arbre sur les surfaces de palier. Ces accostages sont causés notamment par les défauts d'assemblage des pièces en mouvement relatif et aux défauts géométriques dus aux tolérances de fabrication des pièces en mouvement relatif. Dans le cas usuel où l'arbre a un diamètre d'environ 1 m et où le film d'huile a une épaisseur d'environ 0,5 mm, l'ensemble de palier accommode bien les défauts d'assemblage et les défauts géométriques qui sont relativement faibles.

Cependant, un tel ensemble de palier de l'art antérieur n'est pas adapté pour limiter efficacement les accostages d'un arbre d'hydrolienne. En effet, la compressibilité de l'huile induit une inertie susceptible de ralentir les réactions de l'ensemble de palier. Or, le grand diamètre d'un arbre d'hydrolienne induit des défauts d'assemblage et des défauts géométriques relativement importants et nombreux, ce qui nécessite un ensemble de palier réagissant très rapidement aux oscillations de l'arbre. En outre, baigner dans l'huile un ensemble de palier d'hydrolienne induit un risque de pollution du milieu d'implantation de l'hydrolienne.

L'un des buts de la présente invention est de remédier à ces inconvénients, en proposant notamment un ensemble de palier de réaction rapide et sans huile.

Dans ce but, la présente invention a pour objet un ensemble de palier pour reprendre les efforts axiaux transmis par un arbre d'hydrolienne en rotation autour d'un axe de rotation, l'ensemble de palier comprenant plusieurs unités de palier réparties autour de l'axe de rotation, chaque unité de palier comportant :
- une embase fixe ;
- un organe élastique ayant une partie fixe solidaire de l'embase et une partie mobile globalement suivant une direction principale des efforts à supporter ;
- une surface de palier adaptée pour délimiter avec l'arbre un volume de réception d'un film liquide, la surface de palier étant liée à la partie mobile de l'organe élastique.

L'ensemble de palier se caractérise en ce que le film liquide est un film d'eau, en ce que le rayon minimal de la surface de palier est compris entre 1 m et 3 m, en ce que l'organe élastique et l'embase délimitent au moins une chambre contenant de l'eau, les surfaces de l'organe élastique et de l'embase en contact avec l'eau comportant un matériau inoxydable et en ce que l'ensemble de palier comprend en outre plusieurs conduites adaptées pour faire circuler de l'eau, chaque conduite étant agencée de façon à relier au moins deux chambres entre elles, les conduites et les chambres définissant un circuit fermé qui s'étend autour de l'axe de rotation.

En d'autres termes, c'est de l'eau, liquide très peu compressible, qui amortit les battements dus aux défauts d'assemblage et aux défauts géométriques des pièces en mouvement relatif. Les unités de palier sont reliées par un circuit d'eau permettant une réaction rapide.

Selon d'autres caractéristiques avantageuses mais facultatives de la présente invention, prises isolément ou selon toute combinaison techniquement admissible :
- la partie mobile se déplace globalement suivant une direction parallèle à l'axe de rotation et en ce que la ou chaque surface de palier est perpendiculaire à l'axe de rotation ;
- une surface de palier est liée à une seule partie mobile ;
- une surface de palier est liée à plusieurs parties mobiles appartenant respectivement à plusieurs unités de palier ;
- la surface de palier comporte un matériau de dureté supérieure à 800 Hv tel qu'un matériau céramique ;
- l'embase comprend une plaque de forme globalement annulaire et en ce que chaque conduite est formée par des perçages s'étendant dans l'embase ;
- l'organe élastique forme une membrane élastiquement déformable ;
- chaque chambre comprend une portion de forme globalement torique à section circulaire ou non ;
- l'organe élastique comprend une plaque mince ;
- l'organe élastique comprend une pièce épaisse ;
- au moins une unité de palier comprend une saillie partiellement sphérique de façon à former une liaison ponctuelle entre l'organe élastique et l'embase ;
- l'ensemble de palier comprend entre 10 et 20 unités de palier, de préférence 16 ;

Par ailleurs, la présente invention a pour objet une hydrolienne comprenant une turbine équipée d'un arbre mobile en rotation autour d'un axe de rotation, l'hydrolienne étant caractérisée en ce qu'elle comprend au moins un ensemble de palier telle qu'exposée ci-avant.

Selon d'autres caractéristiques avantageuses mais facultatives de la présente invention, prises isolément ou selon toute combinaison techniquement admissible :
- le film d'eau a une épaisseur inférieure à 0,10 mm, de préférence inférieure à 0,06 mm ;
- l'hydrolienne comprend deux ensembles de palier tels qu'exposés ci-avant, les deux ensembles de palier étant coaxiaux à l'axe de rotation, les deux ensembles de palier étant situés à distance l'un de l'autre de façon à définir un logement pour une collerette de l'arbre.

La présente invention sera bien comprise et ses avantages ressortiront aussi à la lumière de la description qui va suivre, donnée uniquement à titre d'exemple non limitatif et faite en référence aux figures annexées, dans lesquelles :
- la figure 1A est une demi-coupe axiale d'une hydrolienne conforme à l'invention et comprenant un ensemble de palier conforme à un premier mode de réalisation de invention ;
- la figure 1B est une coupe complète de l'hydrolienne de la figure 1A ;
- la figure 2 est une vue à plus grande échelle du détail II à la figure 1A ;
- la figure 3 est une vue à plus grande échelle du détail III à la figure 1A ;
- la figure 4 est une section transversale, suivant la ligne IV - IV à la figure 3 ;
- la figure 5 est une section transversale, suivant la ligne V - V à la figure 4 ;
- la figure 6 est une vue schématique illustrant un premier état de l'ensemble de palier des figures 1A à 5 ;
- la figure 7 est une vue schématique analogue à la figure 6 illustrant un deuxième état de l'ensemble de palier des figures 1A à 5 ;
- la figure 8 est une vue analogue à la figure 2 d'un élément de palier conforme à un deuxième mode de réalisation de l'invention ; et
- la figure 9 est une vue analogue à la figure 3 de l'élément de palier de la figure 8.

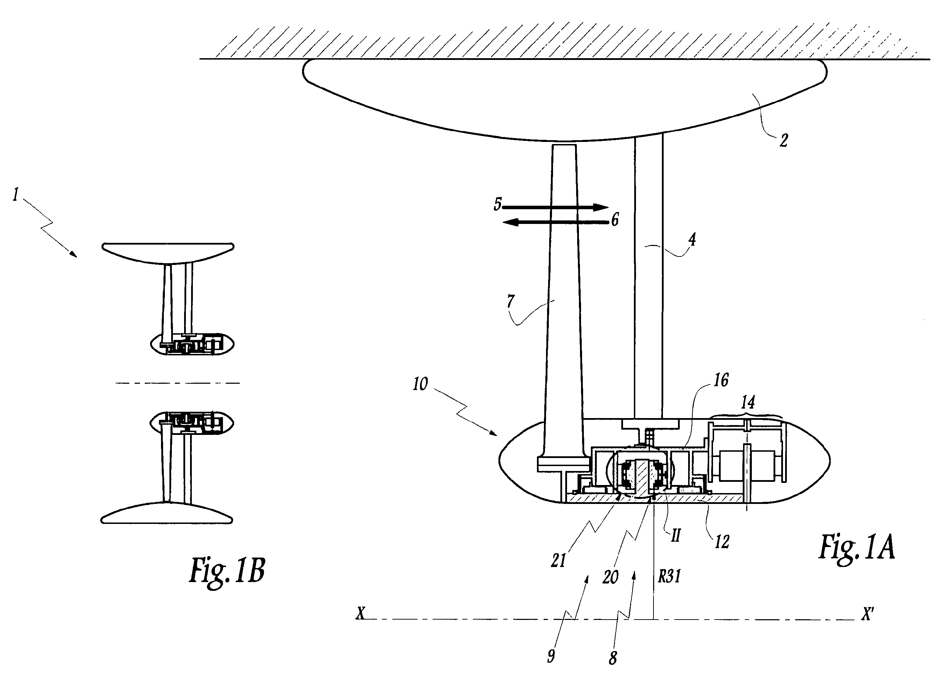

Les figures 1A et 1B montrent une hydrolienne 1 comprenant une ceinture 2, des avant-directrices 4, des aubes 7 et un bulbe 10 également dénommé par le mot anglais « *hub* ». La ceinture 2 est de forme globalement annulaire et elle est reliée au sol par une base gravitaire, structure composée d'une semelle et de plusieurs poteaux.

Le bulbe 10 est fixé à la ceinture 2 par l'intermédiaire des avant-directrices 4. Le bulbe 10. comporte un arbre 12, un générateur de puissance électrique 14 et un support 16. L'arbre 12 est mobile en rotation autour d'un axe de rotation X-X'. L'arbre 12 comporte une collerette 13 qui est monobloc et venue de matière avec l'arbre 12. Les surfaces radiales 13.1 et 13.2 de la collerette 13 sont en forme de couronne plates.

Les aubes 7 sont fixées à l'une des extrémités de l'arbre 12. Les aubes 7 sont entrainées en rotation autour de l'axe X-X' par un flux d'eau s'écoulant dans la ceinture 2, soit dans un sens repéré par une flèche 5, soit dans l'autre sens repéré par une flèche 6.

Les avant-directrices 4 et les aubes 7 s'étendent globalement suivant des directions radiales et elles sont distribuées autour de l'axe X-X'. L'arbre 12, le bulbe 10, le générateur 14, le support 16 et la ceinture 2 présentent chacun une symétrie de révolution autour de l'axe X-X'.

Dans la présente demande, le terme « axial » qualifie soit une direction parallèle à l'axe de rotation X-X', soit une surface globalement perpendiculaire à l'axe de rotation X-X'. Dans la présente demande, le terme « radial » qualifie soit une direction perpendiculaire à l'axe de rotation X-X', soit une surface perpendiculaire à une telle direction radiale. Le terme « circonférentiel » qualifie une direction tangentielle C-C' et non sécante à l'axe de rotation X-X'.

Le bulbe 10 comporte aussi deux ensembles de palier 8 et 9 pour supporter l'arbre 12, précisément pour en reprendre les efforts axiaux. En pratique, l'ensemble de palier 8 est dénommé « butée » et l'ensemble de palier 8 est dénommé « contrebutée ».

Les ensembles de palier 8 et 9 sont coaxiaux à l'axe X-X'. Les ensembles de palier 8 et 9 sont situés à distance l'un de l'autre de façon à définir un logement pour la collerette 13. Dans la mesure où l'ensemble de palier 9 est identique ou semblable à l'ensemble de palier 8, la description de l'ensemble de palier 8 donnée ci-après peut être transposée à l'ensemble de palier 9.

Comme le montrent les figures 1A à 5, l'ensemble de palier 8 comprend plusieurs unités de palier 20, 20.1, 20.2 et équivalents réparties autour de l'axe X-X'. L'ensemble de palier 8 comprend 16 unités de palier 20, 20.1, 20.2 et équivalents. Chaque unité de palier 20, 20.1, 20.2 et équivalents comporte une embase 70, un organe élastique 50 et une surface de palier 31. L'embase 70 est fixée au support 16, par vissage, soudage, encastrement ou autre moyen équivalent.

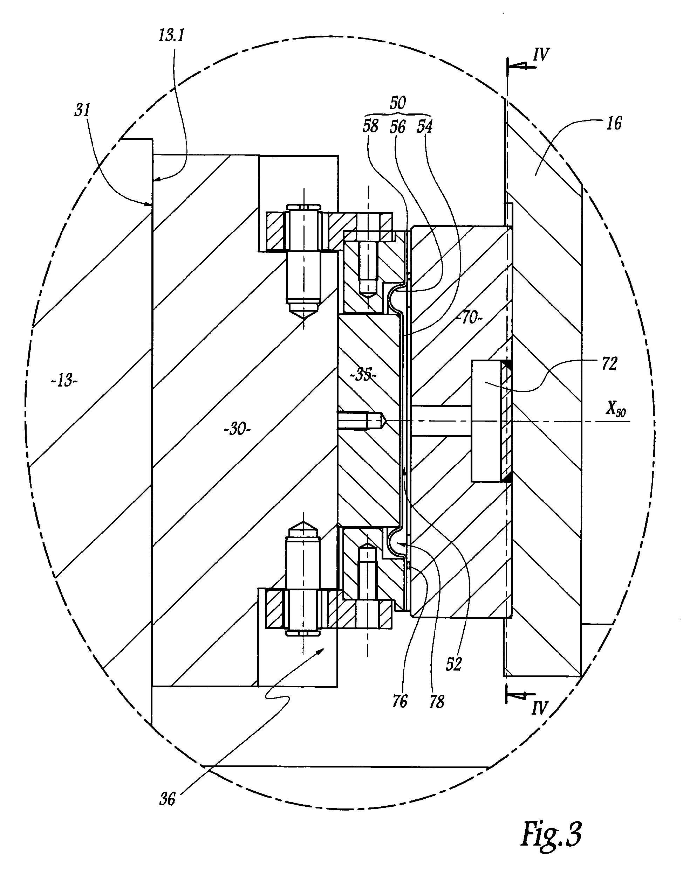

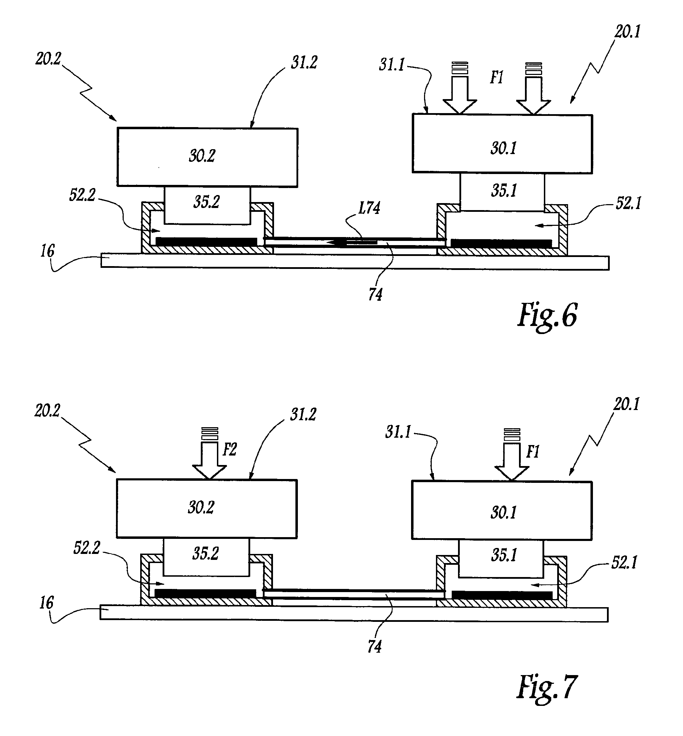

Comme le montre la figure 3, l'organe élastique 50 forme une membrane élastiquement déformable qui a une partie fixe 58 solidaire de l'embase 70 et une partie mobile 54 globalement suivant une direction axiale X50. La direction axiale X50 est la direction principale des efforts à supporter, lesquels sont représentés aux figures 6 et 7 avec les références F1 et F2.

La surface de palier 31 est ici en forme de couronne plane et perpendiculaire à l'axe X-X'. La surface de palier 31 a pour fonction de supporter l'arbre 12 en rotation. La surface de palier 31 est adaptée pour délimiter avec l'arbre 12 un volume de réception d'un film liquide.

Le film de liquide contenu dans ce mince volume de réception peut ainsi former un palier hydrodynamique pour l'arbre 12 en rotation. Le film liquide est un film d'eau dont l'épaisseur E13 est inférieure à 0,10 mm, de préférence inférieure à 0,06 mm. L'eau constituant ce film lubrifiant peut provenir du flux d'eau entraînant les aubes 7.

En d'autres termes, la surface de palier 31 et la surface radiale 13.1 de la collerette 13 sont sensiblement coïncidentes et séparées par un jeu fonctionnel. Comme le montre la figure 1A, le rayon minimal R31 de la surface de palier 31 équivaut à la moitié du diamètre D12 de l'arbre 12. Le rayon R31 de la surface de palier 31 est compris entre 1 m et 3 m. Donc, le diamètre D12 est compris entre 2 m et 6 m.

La surface de palier 31 et/ou la la surface radiale 13.1 de la collerette 13 comporte un matériau de dureté supérieure à 800 Hv (Vickers) tel qu'un matériau céramique, par exemple de le trioxyde de dichrome ou chromine (Cr₂O₃). Un tel matériau limite fortement l'usure de la surface de palier 31 et/ou de la surface radiale 13.1. Tout autre matériau de dureté équivalente peut être utilisé au lieu d'une céramique.

L'organe élastique 50 comprend une plaque mince, par exemple une feuille en acier inoxydable, présentant une symétrie de révolution autour de l'axe X50. La plaque mince rend l'organe élastique 50 relativement compact. La membrane formant l'organe élastique 50 a donc globalement la forme d'un disque. Sa partie fixe 58 est formée par la couronne périphérique plate et sa partie mobile 54 est formée par un disque central. Entre la partie fixe 58 et la partie mobile 54 se trouve un bossage 56 globalement en forme de tore à section en demi-cercle. Le bossage 56 permet la déformation élastique de l'organe élastique 50.

La surface de palier 31 est liée à la partie mobile 54 de l'organe élastique 50. Dans la présente demande, le verbe « lier » implique une liaison cinématique ou une liaison rigide. En l'occurrence, la surface de palier 31 est définie par un patin 30 dont une semelle 35 est en appui-plan sur la partie mobile 54. Le patin 30 et la semelle 35 sont solidarisés par des moyens de fixations 36 comprenant un étrier et des vis. Précisément, chaque surface de palier 31 est liée à une seule partie mobile 54. En d'autres termes, les unités de palier 20 sont indépendantes.

L'organe élastique 50 et l'embase 70 délimitent une chambre 52 contenant de l'eau. La chambre 52 comprend une portion qui est de forme globalement torique à section semi-circulaire car définie par le bossage 56. Les surfaces de l'organe élastique 50 et de l'embase 70 en contact avec l'eau comportent un matériau inoxydable, dans la masse ou en revêtement, en particulier celles de ces surfaces qui délimitent la chambre 52.

L'embase 70 comprend une rondelle 76 souple et un joint torique 78 qui sont constitués d'un matériau résilient tel qu'un caoutchouc ou un élastomère. La rondelle 76 et le joint torique 78 sont écrasés entre la partie fixe 58 et l'embase 70 pour rendre relativement étanche la chambre 52.

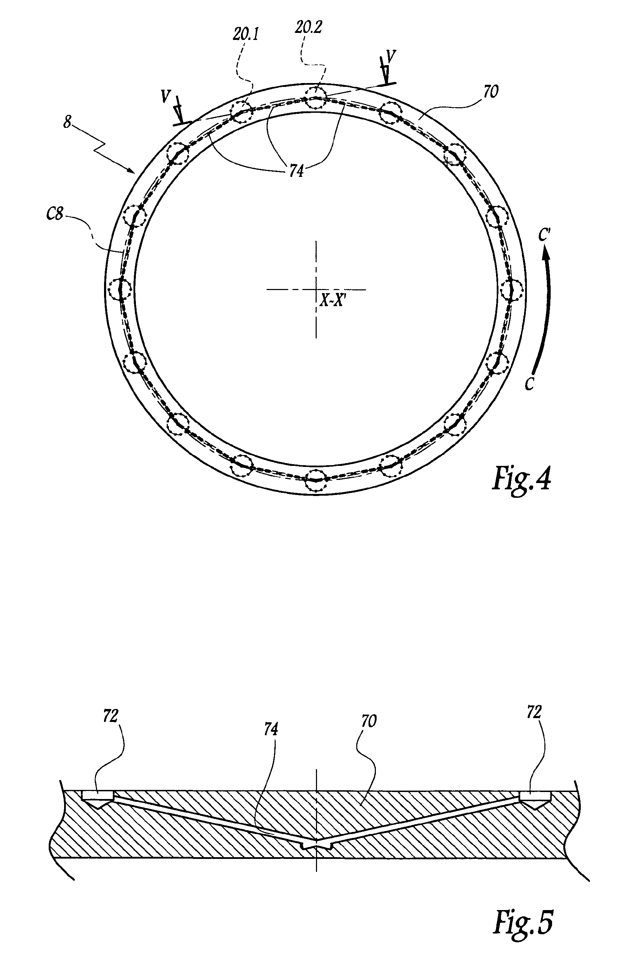

Comme le montrent les figures 4 et 5, l'ensemble de palier 8 comprend en outre plusieurs conduites 74 adaptées pour faire circuler de l'eau. Chaque conduite 74 est agencée de façon à relier entre elles au moins deux chambres 52.1 et 52.2 au niveau d'une gorge 72 respective. Chaque gorge 72 a une section transversale en « T ». Les conduites 74 relient toutes les chambres 52, si bien que les conduites 74 et les chambres 52 définissent un circuit fermé qui s'étend autour de l'axe X-X'. Dans la présente demande, le verbe « relier » implique une mise en communication de liquide, en particulier d'eau.

L'embase 70 est formée notamment par une plaque d'assise de forme globalement annulaire. Chaque conduite 74 est formée par deux perçages borgnes, convergents et obliques qui s'étendent dans l'embase 70. L'eau peut ainsi s'écouler dans les conduites 74 et entre deux chambres 52.1 et 52.2 successives suivant la direction circonférentielle C-C'. En d'autres termes, la pression hydraulique peut être transmise par les conduites 74 entre les chambres 52, ce qui tend à équilibrer les pressions d'eau régnant dans les chambres 52.

Comme le montrent les figures 6 et 7, dans un premier état, la collerette 13 exerce des efforts de pression, symbolisés par des flèches F1 à la figure 6, sur la surface de palier 31.1 du patin 30.1 et par l'intermédiaire du film d'eau E13. Dans ce premier état, la pression n'est pas uniformément répartie entre les unités de palier 52.

La semelle 35.1 appuie donc sur la partie mobile 54 correspondante. Cette partie mobile 54 se rapproche de l'embase 70 et comprime l'eau contenue dans la chambre 52.1. Un écoulement d'eau circule alors de la chambre 52.1 vers les chambres voisines dont la chambre 52.2, ce qui est symbolisé par une flèche L74 à la figure 4.

Cet écoulement d'eau permet d'équilibrer les pressions régnant dans l'eau contenue dans les différentes chambres 52. Dans le deuxième état illustré à la figure 7, les surfaces de palier 31.1 et 31.2 reprennent des efforts F1 et F2 équivalents. Dans ce deuxième état, toutes les unités de palier 20, 20.1 et 20.2 sont à l'équilibre. L'ensemble de palier 8 compense ainsi les défauts géométriques et les défauts d'assemblage des pièces en mouvement relatif.

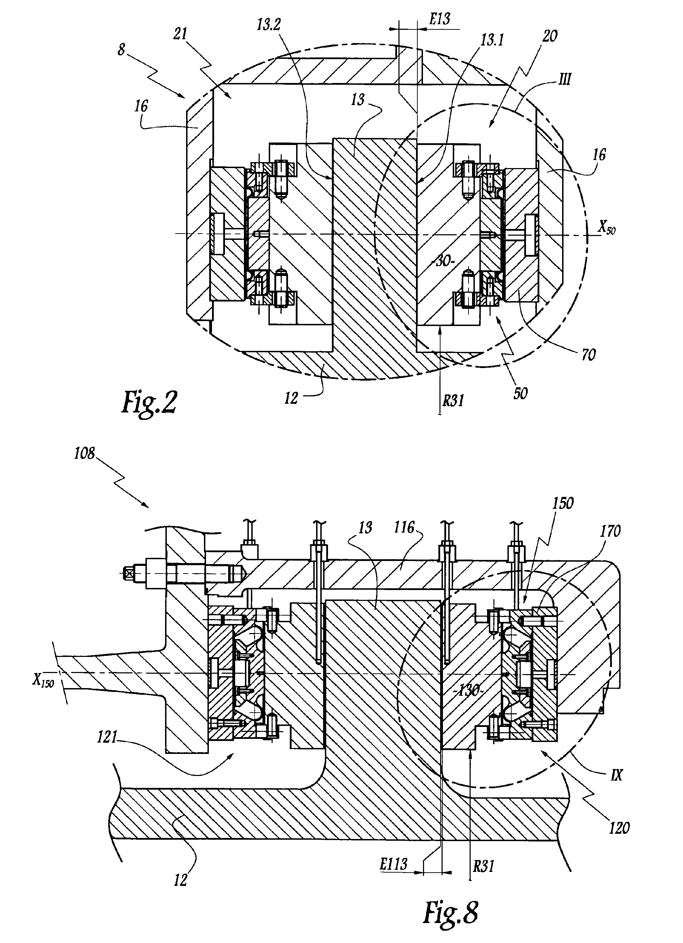

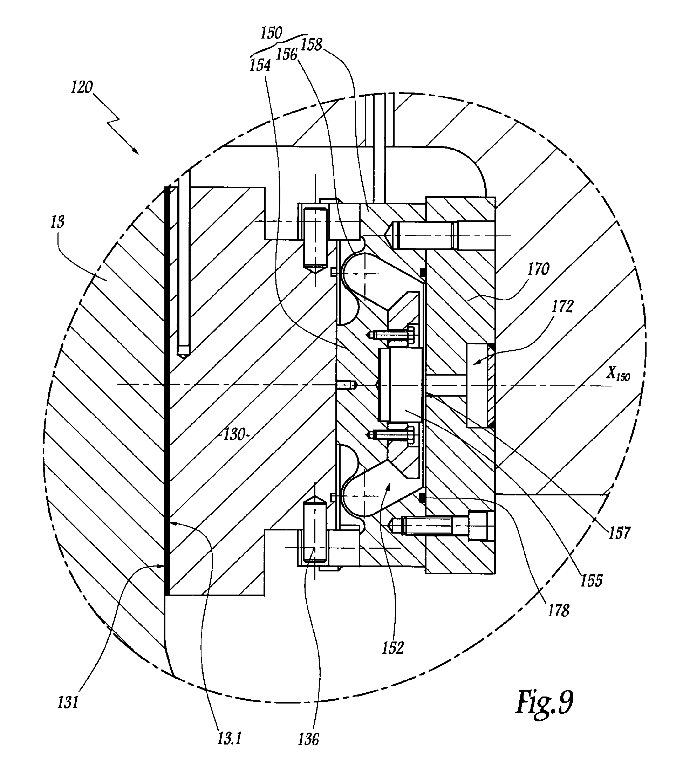

Les figures 8 et 9 montrent un ensemble de palier 108 conforme à un deuxième mode de réalisation de l'invention. L'ensemble de palier 108 est semblable à l'ensemble de palier 8. La description de l'ensemble de palier 8 donnée ci-avant en relation avec les figures 1A à 7 peut être transposée à l'ensemble de palier 108 des figures 8 et 9, à l'exception des différences mentionnées ci-après.

Une entité de l'ensemble de palier 108 qui est identique ou correspondante à une entité de l'ensemble de palier 8 porte la même référence numérique augmentée de 100. On définit ainsi un ensemble de palier 108, une épaisseur E113 de film d'eau, un support fixe 116, une unité de palier 120, un patin 130, une surface de palier 131, des moyens de fixations 36, un rayon minimal R131, un organe élastique 150, un axe X150, une chambre 152, une partie mobile 54, un bossage 156, une partie fixe 158, une embase 170, une gorge 172 et un joint torique 178.

L'ensemble de palier 108 diffère de l'ensemble de palier 8 en ce que l'organe élastique 150 comprend une pièce épaisse formant la partie mobile 154 et la partie fixe 158 reliée par le bossage 156. La partie mobile 154 et la partie fixe 158 sont donc plus épaisses respectivement que la partie mobile 54 et la partie fixe 58. Cela permet le cas échéant de supporter des charges plus grandes.

L'organe élastique 150 et l'embase 170 sont constitués ou revêtus d'un matériau inoxydable, de sorte que les surfaces de l'organe élastique 150 et de l'embase 170 en contact avec l'eau comportent un matériau inoxydable pour résister à la corrosion par l'eau contenu dans la chambre 152.

Par ailleurs, l'ensemble de palier 108 diffère de l'ensemble de palier 8 en ce qu'au moins une unité de palier 120 comprend une butée 155 solidaire de la partie mobile 154. La butée 155 comporte une saillie 157 partiellement sphérique. La saillie 157 forme une liaison ponctuelle en rotule entre l'organe élastique 150 et l'embase 170. La butée 155 et la saillie 157 ont pour fonction de limiter la course de la partie mobile 154 pour limiter les contraintes mécaniques subies par le bossage 156 lors de ses déformations élastiques.

Par ailleurs, l'embase 170 comporte seulement le joint torique 178 pour rendre relativement étanche la chambre 152, mais pas de rondelle de type 76. En effet, l'étanchéité de la chambre 152 est aussi assurée par le serrage de la partie fixe 174 sur l'embase 170 au moyen de vis et par un usinage ajusté des surfaces en contact de la partie fixe 174 et de l'embase 170.

Selon d'autres modes de réalisation non représentés de l'invention :
- au lieu d'une collerette 13 monobloc avec l'arbre 12, la collerette peut être réalisée en deux parties, par exemple deux demi-collerettes juxtaposées axialement et/ou rapportées sur l'arbre ;
- l'ensemble de palier comprend entre 10 et 20 unités de palier de type 20, 21 ;
- une même surface de palier est liée à plusieurs parties mobiles appartenant respectivement à plusieurs unités de palier ; en d'autres termes, le patin est commun à tous les organes élastiques ; en particulier, une même surface de palier est liée à toutes les parties mobiles.

## Revendications

1. Ensemble de palier (8, 9) pour reprendre les efforts axiaux transmis par un arbre (12) d'hydrolienne (1) en rotation autour d'un axe de rotation (X-X'), l'ensemble de palier (8, 9) comprenant plusieurs unités de palier (30, 30.1, 30.2, 31 ; 130, 131) réparties autour de l'axe de rotation (X-X'), chaque unité de palier (30, 30.1, 30.2, 31 ; 130, 131) comportant:
- une embase (70 ; 170) fixe ;
- un organe élastique (50 ; 150) ayant une partie fixe (58 ; 158) solidaire de l'embase (70 ; 170) et une partie mobile (54 ; 154) globalement suivant une direction principale (X50 ; X150) des efforts (F1, F2) à supporter ;
- une surface de palier (31 ; 131) adaptée pour délimiter avec l'arbre (12) un volume de réception d'un film liquide (E13), la surface de palier (31 ; 131) étant liée à la partie mobile (54 ; 154) de l'organe élastique (50 ; 150),
l'ensemble de palier (8, 9) étant **caractérisé en ce que** le film liquide (E13) est un film d'eau, **en ce que** le rayon minimal (R31 ; R131) de la surface de palier (31 ; 131) est compris entre 1 m et 3 m, **en ce que** l'organe élastique (50 ; 150) et l'embase (70 ; 170) délimitent au moins une chambre (52, 52.1, 52.2 ; 152) contenant de l'eau, les surfaces de l'organe élastique (50 ; 150) et de l'embase (70 ; 170) en contact avec l'eau comportant un matériau inoxydable et **en ce que** l'ensemble de palier (8, 9) comprend en outre plusieurs conduites (74) adaptées pour faire circuler de l'eau, chaque conduite (74) étant agencée de façon à relier au moins deux chambres (52, 52.1, 52.2 ; 152) entre elles, les conduites (74) et les chambres (52, 52.1, 52.2 ; 152) définissant un circuit fermé qui s'étend autour de l'axe de rotation (X-X').

2. Ensemble de palier (8, 9) selon la revendication 1, **caractérisé en ce que** la partie mobile (54 ; 154) se déplace globalement suivant une direction (X50) parallèle à l'axe de rotation (X-X') et **en ce que** la ou chaque surface de palier (31 ; 131) est perpendiculaire à l'axe de rotation (X-X').

3. Ensemble de palier (8, 9) selon l'une des revendications précédentes, **caractérisé en ce qu'**une surface de palier (31 ; 131) est liée à une seule partie mobile (54 ; 154).

4. Ensemble de palier (8, 9) selon l'une des revendications 1 à 2, **caractérisé en ce qu'**une surface de palier (31 ; 131) est liée à plusieurs parties mobiles appartenant respectivement à plusieurs unités de palier (30, 30.1, 30.2, 31 ; 130, 131).

5. Ensemble de palier (8, 9) selon l'une des revendications précédentes, **caractérisé en ce que** la surface de palier (31 ; 131) comporte un matériau de dureté supérieure à 800 Hv tel qu'un matériau céramique.

6. Ensemble de palier (8, 9) selon l'une des revendications précédentes, **caractérisé en ce que** l'embase (70 ; 170) comprend une plaque de forme globalement annulaire et **en ce que** chaque conduite (74) est formée par des perçages s'étendant dans l'embase (70 ; 170).

7. Ensemble de palier (8, 9) selon l'une des revendications précédentes, **caractérisé en ce que** l'organe élastique (50 ; 150) forme une membrane élastiquement déformable.

8. Ensemble de palier (8, 9) selon l'une des revendications précédentes, **caractérisé en ce que** chaque chambre (52, 52.1, 52.2 ; 152) comprend une portion de forme globalement torique à section circulaire ou non.

9. Ensemble de palier (8, 9) selon l'une des revendications précédentes, **caractérisé en ce que** l'organe élastique (50) comprend une plaque formée par une feuille telle qu'une feuille en acier inoxydable.

10. Ensemble de palier selon l'une des revendications 1 à 8, **caractérisé en ce que** l'organe élastique (150) comprend une pièce formant la partie mobile (154) et la partie fixe (158).

11. Ensemble de palier selon la revendication 10, **caractérisé en ce qu'**au moins une unité de palier (120) comprend une saillie (157) partiellement sphérique de façon à former une liaison ponctuelle entre l'organe élastique (150) et l'embase (170).

12. Ensemble de palier (8, 9) selon l'une des revendications précédentes, **caractérisé en ce qu'**il comprend entre 10 et 20 unités de palier (20, 20.1, 20.2, 21 ; 120, 121), de préférence 16.

13. Hydrolienne (1) comprenant une turbine équipée d'un arbre (12) mobile en rotation autour d'un axe de rotation (X-X'), l'hydrolienne (1) étant **caractérisée en ce qu'**elle comprend au moins un ensemble de palier (8, 9) selon l'une des revendications précédentes.

14. Hydrolienne selon la revendication 13, **caractérisée en ce que** le film d'eau a une épaisseur (E13) inférieure à 0,10 mm, de préférence inférieure à 0,06 mm.

15. Hydrolienne selon l'une des revendications 13 à 14, **caractérisée en ce qu'**elle comprend deux ensembles de palier (8, 9) selon l'une des revendications précédentes, les deux ensembles de palier (8, 9) étant coaxiaux à l'axe de rotation (X-X'), les deux ensembles de palier (8, 9) étant situés à distance l'un de l'autre de façon à définir un logement pour une collerette (13) de l'arbre (12).

## Claims

1. Bearing assembly (8, 9) for taking up the axial forces transmitted by the shaft (12) of a marine turbine (1) in rotation around an axis of rotation (X-X'), said bearing assembly (8, 9) comprising a number of bearing units (30, 30.1, 30.2, 31; 130, 131) distributed around the axis of rotation (X-X'), each bearing unit (30, 30.1, 30.2, 31; 130, 131) comprising:
- a fixed base (70; 170);
- an elastic member (50; 150) having a fixed part (58; 158) which is integral with the base (70; 170) and a part (54; 154) which is movable, as a whole, in a main direction (X50; X150) of the forces (F1, F2) to be supported;
- a bearing surface (31; 131) which is adapted to delimit, with the shaft (12), a volume for receiving a liquid film (E13), said bearing surface (31; 131) being linked to the movable part (54; 154) of the elastic member (50; 150),
the bearing assembly (8, 9) being **characterised in that** the liquid film (E13) is a film of water, **in that** the minimum radius (R31; R131) of the bearing surface (31; 131) is between 1 m and 3 m, **in that** the elastic member (50; 150) and the base (70; 170) delimit at least one chamber (52, 52.1, 52.2; 152) containing water, the surfaces of the elastic member (50; 150) and of the base (70; 170) that are in contact with the water comprising a stainless material, and **in that** the bearing assembly (8, 9) further comprises a number of conduits (74) which are adapted to cause the water to circulate, each conduit (74) being arranged in such a way as to connect at least two chambers (52, 52.1, 52.2; 152) with one another, the conduits (74) and the chambers (52, 52.1, 52.2; 152) defining a closed circuit which extends around the axis of rotation (X-X').

2. Bearing assembly (8, 9) according to claim 1, **characterised in that** the movable part (54; 154) moves, as a whole, in a direction (X50) parallel to the axis of rotation (X-X'), and **in that** the bearing surface (31; 131), or each bearing surface (31; 131), is perpendicular to the axis of rotation (X-X').

3. Bearing assembly (8, 9) according to one of the preceding claims, **characterised in that** one bearing surface (31; 131) is linked to a single movable part (54; 154).

4. Bearing assembly (8, 9) according to either of claims 1 or 2, **characterised in that** one bearing surface (31; 131) is linked to a number of movable parts belonging, respectively, to a number of bearing units (30, 30.1, 30.2, 31; 130, 131).

5. Bearing assembly (8, 9) according to one of the preceding claims, **characterised in that** the bearing surface (31; 131) comprises a material with a hardness greater than 800 Hv, such as a ceramic material.

6. Bearing assembly (8, 9) according to one of the preceding claims, **characterised in that** the base (70; 170) comprises a plate with a shape which is annular overall, and **in that** each conduit (74) is formed by perforations extending within said base (70; 170).

7. Bearing assembly (8, 9) according to one of the preceding claims, **characterised in that** the elastic member (50; 150) forms an elastically deformable membrane.

8. Bearing assembly (8, 9) according to one of the preceding claims, **characterised in that** each chamber (52, 52.1, 52.2; 152) comprises a portion with a shape which is toric overall with a circular or non-circular section.

9. Bearing assembly (8, 9) according to one of the preceding claims, **characterised in that** the elastic member (50) comprises a plate which is formed by a sheet, such as a sheet made of stainless steel.

10. Bearing assembly (8, 9) according to one of claims 1 to 8, **characterised in that** the elastic member (150) comprises a piece that forms the movable part (154) and the fixed part (158).

11. Bearing assembly according to claim 10, **characterised in that** at least one bearing unit (120) comprises a projection (157) which is partly spherical so as to form a punctiform link between the elastic member (50; 150) and the base (70; 170).

12. Bearing assembly (8, 9) according to one of the preceding claims, **characterised in that** it comprises between 10 and 20 bearing units (20, 20.1, 20.2, 21; 120, 121), preferably 16.

13. Marine turbine (1) comprising a turbine equipped with a shaft (12) which is movable in rotation around an axis of rotation (X-X'), said marine turbine (1) being **characterised in that** it comprises at least one bearing assembly (8, 9) according to one of the preceding claims.

14. Marine turbine according to claim 13, **characterised in that** the film of water has a thickness (E13) of less than 0.10 mm, preferably less than 0.06 mm.

15. Marine turbine according to either of claims 13 or 14, **characterised in that** it comprises two bearing assemblies (8, 9) according to one of the preceding claims, the two bearing assemblies (8, 9) being coaxial with the axis of rotation (X-X'), the two bearing assemblies (8, 9) being situated at a distance from one another so as to define a recess for a flange (13) belonging to the shaft (12).

## Patentansprüche

1. Lageranordnung (8, 9) zum Aufnehmen der axialen Kräfte, die von einer um eine Drehachse (X-X') drehbaren Welle (12) eines Meeresströmungskraftwerks (1) übertragen werden, wobei die Lageranordnung (8, 9) mehrere um die Drehachse (X-X') verteilte Lagereinheiten (30, 30.1, 30.2, 31; 130, 131) aufweist, und wobei jede Lagereinheit (30, 30.1, 30.2, 31; 130, 131) folgendes aufweist:
- einen ortsfesten Sockel (70; 170);
- ein elastisches Organ (50; 150) mit einem ortsfesten Teil (58; 158), der mit dem Sockel (70; 170) einstückig verbunden ist, und einem beweglichen Teil (54; 154), der im Wesentlichen entlang einer Hauptrichtung (X50; X150) der aufzunehmenden Kräfte (F1, F2) beweglich ist;
- eine Lagerfläche (31; 131), die dazu ausgelegt ist, mit der Welle (12) ein Aufnahmevolumen eines Flüssigkeitsfilms (E13) zu begrenzen, wobei die Lagerfläche (31; 131) mit dem beweglichen Teil (54; 154) des elastischen Organs (50; 150) verbunden ist,
wobei die Lageranordnung (8, 9) **dadurch gekennzeichnet ist,**
**dass** der Flüssigkeitsfilm (E13) ein Wasserfilm ist,
**dass** der Mindestradius (R31; R131) der Lagerfläche (31; 131) zwischen 1 m und 3 m beträgt,
**dass** das elastische Organ (50; 150) und der Sockel (70; 170) mindestens eine Wasser enthaltende Kammer (52, 52.1, 52.2; 152) begrenzen, wobei die mit dem Wasser in Berührung stehenden Oberflächen des elastischen Organs (50; 150) und des Sockels (70; 170) ein nichtoxidierbares Material aufweisen, und dass die Lageranordnung (8, 9) ferner mehrere Leitungen (74) aufweist, die zum Zirkulieren von Wasser ausgelegt sind, wobei jede Leitung (74) derart ausgelegt ist, dass sie mindestens zwei Kammern (52, 52.1, 52.2; 152) miteinander verbindet, und wobei die Leitungen (74) und die Kammern (52, 52.1, 52.2; 152) einen geschlossenen Kreislauf definieren, der sich um die Drehachse (X-X') erstreckt.

2. Lageranordnung (8, 9) nach Anspruch 1,
**dadurch gekennzeichnet,**
**dass** sich das bewegliche Teil (54; 154) im Wesentlichen gemäß einer zur Drehachse (X-X') parallelen Richtung (X50) verlagert,
und **dass** die bzw. jede Lagerfläche (31; 131) senkrecht zur Drehachse (X-X') ist.

3. Lageranordnung (8, 9) nach einem der vorherigen Ansprüche,
**dadurch gekennzeichnet,**
**dass** eine Lagerfläche (31; 131) mit einem einzelnen beweglichen Teil (54; 154) verbunden ist.

4. Lageranordnung (8, 9) nach einem der Ansprüche 1 bis 2,
**dadurch gekennzeichnet,**
**dass** eine Lagerfläche (31; 131) mit mehreren beweglichen Teilen verbunden ist, die jeweils zu mehreren Lagereinheiten (30, 30.1, 30.2, 31; 130, 131) gehören.

5. Lageranordnung (8, 9) nach einem der vorherigen Ansprüche,
**dadurch gekennzeichnet,**
**dass** die Lagerfläche (31; 131) ein Material mit einer Härte von mehr als 800 Hv, wie etwa ein keramisches Material, aufweist.

6. Lageranordnung (8, 9) nach einem der vorherigen Ansprüche,
**dadurch gekennzeichnet,**
**dass** der Sockel (70; 170) eine im Wesentlichen ringförmige Platte aufweist, und dass jede Leitung (74) von Bohrungen gebildet ist, die sich in den Sockel (70; 170) erstrecken.

7. Lageranordnung (8, 9) nach einem der vorherigen Ansprüche,
**dadurch gekennzeichnet,**
**dass** das elastische Organ (50; 150) eine elastisch verformbare Membran bildet.

8. Lageranordnung (8, 9) nach einem der vorherigen Ansprüche,
**dadurch gekennzeichnet,**
**dass** jede Kammer (52, 52.1, 52.2; 152) einen im Wesentlichen torischen Abschnitt aufweist, dessen Querschnitt kreisförmig oder nicht kreisförmig ist.

9. Lageranordnung (8, 9) nach einem der vorherigen Ansprüche,
**dadurch gekennzeichnet,**
**dass** das elastische Organ (50) eine Platte aufweist, die von einem Blech, wie etwa einem Blech aus rostfreiem Stahl gebildet wird.

10. Lageranordnung nach einem der Ansprüche 1 bis 8,
**dadurch gekennzeichnet,**
**dass** das elastische Organ (150) ein Teil aufweist, das das bewegliche Teil (154) und das ortsfeste Teil (158) bildet.

11. Lageranordnung nach Anspruch 10,
**dadurch gekennzeichnet,**
**dass** mindestens eine Lagereinheit (120) einen teilweise sphärischen Vorsprung (157) aufweist, so dass dieser eine punktuelle Verbindung zwischen dem elastischen Organ (150) und dem Sockel (170) bildet.

12. Lageranordnung (8, 9) nach einem der vorherigen Ansprüche,
**dadurch gekennzeichnet,**
**dass** sie zwischen 10 und 20, vorzugsweise 16 Lagereinheiten (20, 20.1, 20.2, 21; 120, 121) aufweist.

13. Meeresströmungskraftwerk (1) mit einer Turbine, die mit einer um eine Drehachse (X-X') drehbar beweglichen Welle (12) versehen ist,
wobei das Meeresströmungskraftwerk (1) **dadurch gekennzeichnet ist,**
**dass** es mindestens eine Lageranordnung (8, 9) nach einem der vorherigen Ansprüche aufweist.

14. Meeresströmungskraftwerk nach Anspruch 13,
**dadurch gekennzeichnet,**
**dass** der Wasserfilm eine Dicke (E13) von weniger als 0,10 mm, vorzugsweise weniger als 0,06 mm besitzt.

15. Meeresströmungskraftwerk nach einem der Ansprüche 13 bis 14,
**dadurch gekennzeichnet,**
**dass** es zwei Lageranordnungen (8, 9) nach einem der vorherigen Ansprüche aufweist, wobei die beiden Lageranordnungen (8, 9) mit der Drehachse (X-X') koaxial angeordnet sind, und wobei die beiden Lageranordnungen (8, 9) derart voneinander beabstandet sind, dass sie eine Aufnahme für einen Bund (13) der Welle (12) begrenzen.
